# EUROPEAN PATENT SPECIFICATION

(11) **EP 2 431 417 B1**
(45) Date of publication and mention of the grant of the patent: **18.12.2013**
(21) Application number: 10774817.0
(22) Date of filing: 23.04.2010
(51) Int. Cl.: C08L 23/16, C08L 23/10, C08L 23/14, C08L 23/24, C08L 53/00, C09K 3/10, F16J 15/10, C08K 5/00, C08L 23/08

(54) **ELASTOMER COMPOSITION**
ELASTOMERZUSAMMENSETZUNG
COMPOSITION ÉLASTOMÈRE

(30) Priority: 13.05.2009 JP 2009116173
(43) Date of publication of application: 21.03.2012
(73) Proprietor: NOK Corporation, Minato-ku Tokyo 105-8585 (JP)
(72) Inventor: YOKOTA Atsushi, Fujisawa-shi Kanagawa 251-0042 (JP); KOJIMA Yoshifumi, Fujisawa-shi Kanagawa 251-0042 (JP)
(74) Representative: HOFFMANN EITLE
(86) International application number: PCT/JP2010/057246
(87) International publication number: WO 2010/131559

(56) References cited:
- EP-A1- 1 464 670
- EP-A1- 1 698 659
- WO-A1-2007/125819
- JP-A- 4 229 481
- JP-A- 8 283 698
- JP-A- 2003 173 671
- JP-A- 2004 036 630
- JP-A- 2004 288 296
- JP-A- 2009 036 381
- JP-A- 2009 235 192

## Description

### TECHNICAL FIELD

The present invention relates to an elastomer composition. More particularly, the present invention relates to an elastomer composition that can be suitably used, for example, as a material for molding a packing material of a hard disk drive cover-integrated gasket.

### BACKGROUND ART

A recent tendency toward smaller size and higher performance of electronic appliances is requiring smaller and thinner structural parts. However, such smaller parts cause deterioration in assembling efficiency of the manufacturing process. Accordingly, integration and composing of various parts are desired, together with improvements in their characteristics and performance, such as outgassing characteristics and sealing properties.

In electronic memory devices, particularly as gaskets to be fitted as hard disk drive covers, which prevent the entrance of water and dust and for which low outgassing characteristics are required, a rubber sheet itself or a foamed polyurethane sheet is held between metallic covers made of stainless steel, aluminum, or the like. In this connection, Patent Document 1 proposes integrally bonding a metallic cover made of stainless steel, etc., and a rubber material (e.g., fluororubber) with an adhesive, thereby improving assembling efficiency.

In this method, however, a gasket-shaped rubber is previously vulcanization-molded in a separate process, and then bonded to a metallic cover with an adhesive; thus, the process is long and complicated. Actually, the gasket vulcanization step takes several minutes. Moreover, since vulcanized gaskets are liable to tear into smaller pieces and susceptible to the deposition of dust, etc., repeated washing or screening is imperative before assembling. For this reason, a more simple method has been desired.

To solve these problems, Patent Document 2 proposes a gasket material comprising a polystyrene-based block copolymer-made elastomer. This gasket material can simplify the process without the need for a vulcanization step, and allows material recycling, contributing to cost reduction, as compared with rubber materials.

Because this material is thin, soft, and liable to be sticky, the working efficiency of assembling of a hard disk drive will be reduced unless the material is fixed in some way beforehand. To overcome this problem, a gasket made of a polystyrene-based block copolymer is previously produced by injection molding in a so-called frame, and the gasket is then integrally assembled between the box body and cover body of a hard disk drive, etc. However, after all, this method requires the use of frames and like additional parts.

Severe requirements are particularly imposed on the sealing properties and cleanliness of gaskets to be fitted to hard disk drive covers.

Three key factors that affect sealing properties are hardness, compression set characteristics, and humidity permeability of gaskets. Hardness (according to JIS K6253, Shore A) is preferably 60 or less, particularly preferably 25 to 55. Gaskets with a hardness of 65 or more fail to ensure sealing performance when they are assembled as products, because their reaction force results in the formation of gaps. In contrast, gaskets with a hardness of less than 25 require careful handling, because they are liable to tear and be sticky.

Materials with inferior compression set characteristics also fail to ensure sealing performance because of tension loss in the course of long-term use. Material with a compression set of 100% or higher are impractical. Furthermore, objects to be sealed include steam (moisture) as well as dirt and dust. Since the presence of steam inside the hard disk drive causes rust, gasket materials must have a low water permeability.

Cleanliness-controlling factors are outgassing, components as contained, and a filler that tends to drop off from the gasket. Deposition of outgases generated from the materials onto the disk causes crushing. Moreover, chlorine, silicon, sulfur, sulfuric acid, nitric acid, acrylic acid ester, etc. (including their presence in the form of ions) may also cause corrosion of the interior of the hard disk drive. When a large amount of filler having no affinity toward the polymers is contained in the gasket materials, the filler particles may drop off from the gasket to fall into the hard disk drive, also giving rise to crushing.

In light of the above, the present applicant proposes a hard disk drive gasket that can be easily manufactured and has low outgassing characteristics, low hardness, and excellent sealing properties at high temperature (Patent Document 3). This gasket is prepared by integrating a packing material with a metallic cover by an adhesive, wherein the packing material is a molded product obtained from a mixture of 100 parts by weight of a blend product comprising 70 to 30 wt.% of a styrene-based thermoplastic elastomer and 30 to 70 wt.% of a partially dynamic-crosslinked polyolefin-based thermoplastic elastomer, 10 to100 parts by weight of a polypropylene-based resin, 20 to 130 parts by weight of a plasticizer, and 0,1 to 10 parts by weight of a crosslinking agent; and the packing material has a hardness (according to JIS K6253, durometer type A) of 40 to 50 and a compression set (according to JIS K6262; 100°C, 72 hours) of 50% or less. However, there is a demand for sealing materials that can accomplish much lower outgassing while maintaining the functions of the gasket disclosed in Patent Document 3.

### PRIOR ART DOCUMENT

### PATENT DOCUMENT

Patent Document 1 : JP-B-2517797
Patent Document 2 : JP-B-2961068
Patent Document 3 : JP-A-2004-288296

### OUTLINE OF THE INVENTION

### PROBLEM TO BE SOLVED BY THE INVENTION

An object of the present invention is to provide an elastomer composition that has low outgassing characteristics, low hardness, and excellent sealing properties at high temperature, and that can be suitably used, for example, as a material for molding a gasket material of a hard disk drive cover-integrated gasket.

### MEANS FOR SOLVING THE PROBLEM

The above object of the present invention can be attained by an elastomer composition comprising:
(A) 100 parts by weight of an ethylene propylene-based copolymer rubber or a polyolefin-based thermoplastic elastomer, preferably a partially dynamic-crosslinked polyolefin-based thermoplastic elastomer;
(B) 10 to 200 parts by weight of a polypropylene-based resin;
(C) 10 to 200 parts by weight of a styrene-based thermoplastic elastomer; and
(D) 100 to 400 parts by weight of a C₁₀-, C₁₂-, or C₁₂/C₁₄-derived poly α-olefin plasticizer having a viscosity (according to JIS K2283, which corresponds to ASTM D-445) of 5 to 20 mm²/s at 100°C.

### EFFECT OF THE INVENTION

The elastomer composition of the present invention has an excellent effect in that a molded product obtained from this composition with the use of a specific poly α-olefin as a plasticizer has much lower outgassing characteristics compared to conventional products. The elastomer composition can be suitably used, for example, as a material for molding a packing material of a hard disk drive cover-integrated gasket.

### EMBODIMENTS FOR CARRYING OUT THE INVENTION

As the ethylene-propylene-based copolymer rubber (A), an ethylen- propylene-nonconjugated diene terpolymer rubber or an ethylene-propylene copolymer rubber is used. Examples of usable ethylene-propylene-nonconjugated diene terpolymer rubber include those having an ethylene content of 50 to 80 wt.% and an iodine value of 10 to 25. Examples of usable nonconjugated dienes include dicyclopentadiene, 1,4-hexadiene, dicyclooctadiene, methylenenorbornene, ethylidenenorbornene, and the like. Examples of usable ethylene - propylene copolymer rubbers include those having an ethylene content of 10 to 25 wt.% and a melt flow rate (MFR; according to JIS K7210, which corresponds to ASTM D-1239) of 3 to 30 g/10 min.

The polypropylene-based resin (B) is a thermoplastic resin obtained by the polymerization of propylene in the presence of a catalyst, and is a crystalline polymer with an isotactic structure, a syndiotactic structure, or the like, or a copolymer of propylene and a small amount of α-olefin other than propylene, such as ethylene, 1-butene, 1-hexene, and 4-methyl-1-pentene. As the polypropylene resin, a crystalline polymer having an MFR of 0.1 to 100 g/10 min. is used. When the polypropylene resin used has an MFR of less than this range, fluidity is poor, and desired moldability cannot be obtained. In contrast, when the polypropylene resin used has an MFR of more than this range, sufficient physical properties cannot be obtained. The polypropylene-based resin is used in an amount of 5 to 100 parts by weight, based on 100 parts by weight of ethylene propylene-based copolymer rubber. When the amount of polypropylene-based resin is greater than this range, heat resistance decreases, and plastic deformation easily occurs, thus reducing sealing properties. In contrast, when the amount is less than this range, fluidity decreases, and processability, particularly continuous productivity due to injection molding, becomes lower.

As the styrene-based thermoplastic elastomer (C), a polystyrene-poly(ethylene-propylene)-polystyrene triblock copolymer [SEPS], a polystyrene-poly(ethylene/ethylene-propylene)-polystyrene triblock copolymer [SEEPS], or the like is used. SEPS is obtained by hydrogenating a polystyrene-polyisoprene-polystyrene block copolymer, and SEEPS is obtained by hydrogenating a polystyrene-(ethylene-isoprene)random copolymer-polystyrene block copolymer. These styrene-based thermoplastic elastomers may have functional groups, such as a hydroxyl group. Additionally, SEP, SEBS, etc., can be also used.

Such a styrene-based thermoplastic elastomer preferably has a number average molecular weight (Mn) of 50,000 or more. When the number average molecular weight (Mn) is less than this range, bleeding of the plasticizer increases, and compression set also increases, causing inconvenience of lack of practical use. On the other hand, the upper limit of the number average molecular weight (Mn) is not particularly limited, but is generally about 400,000. Such a styrene-based thermoplastic elastomer has an amorphous polystyrene block content of 10 to 70 wt.%, preferably 15 to 60 wt.%. An amorphous polymer is preferably used as a polymer part to connect the amorphous polystyrene blocks at both ends. Although a styrene-based thermoplastic elastomer is mainly used singly, two or more styrene thermoplastic elastomers may be used in blend type. Practically, Septon 2006 [SEPS], Septon 4055, and Septon 4077 [SEEPS] (all of which are produced by Kuraray Co., Ltd.), and other commercial products that satisfy these conditions can be used.

Such a styrene-based thermoplastic elastomer is used in an amount of 10 to 200 parts by weight, based on 100 parts by weight of ethylene-propylene-based copolymer rubber. When the amount of styrene-based thermoplastic elastomer is less than this range, fluidity decreases, and continuous productivity due to injection molding becomes lower. In contrast, when the amount is greater than this range, heat resistance decreases, and plastic deformation easily occurs, thus reducing sealing properties.

As the plasticizer (D), a poly α-olefin, which is a polymer comprising α-olefin as a starting material, is used. Usable poly α-olefins comprise C₁₀-, C₁₂-, or C₁₂/C₁₄-derived α-olefin as a starting material, and have a viscosity (according to JIS K2283) of 5 to 20 mm²/s, preferably 6 to 10 mm²/s, at 100°C. Such a poly α-olefin is used in an amount of 100 to 400 parts by weight, based on 100 parts by weight of ethylene-propylene-based copolymer rubber. When the amount of poly α-olefin is greater than this range, sufficient extensibility in the polymer cannot be achieved, and bleeding occurs, causing contamination. In contrast, when the amount is less than this range, hardness increases, and the resulting product has a greater reactive force and is not suitable for gaskets.

The above-described components are crosslinked with an organic peroxide crosslinking agent (E). Examples of organic peroxides include dicumyl peroxide, di-tert-butyl peroxide, 2,5-dimethyl-2,5-di(tert-butylperoxy)hexane, 2,5-dimethyl-2,5-di(tert-butylperoxy)hexyne-3, tert-butyl cumyl peroxide, and the like. Such an organic peroxide is used in an amount of 0.1 to 5 parts by weight, preferably 1 to 4 parts by weight, based on 100 parts by weight of ethylene-propylene-based copolymer rubber. It is also preferable to use a crosslinking aid, together with the organic peroxide crosslinking agent. Examples of such a crosslinking aid (F) include triallyl isocyanurate, triallyl cyanurate, N,N'-m-phenylenedimaleimide, trimethylolpropane trimethacrylate, and other crosslinkable monomers (polyfunctional unsaturated compounds). Such a cross-linkable monomer is used in an amount of 0.1 to 2.5 parts by weight, preferably 0.5 to 2 parts by weight, based on 100 parts by weight of ethylene-propylene-based copolymer rubber. When no crosslinking agent is used, polystyrene-based thermoplastic elastomer is not partially crosslinked, thereby resulting in a gasket having inferior sealing properties evaluated in a sealing-property test described later.

Among the above essential components, the ethylene-propylene-based copolymer rubber can be replaced by a polyolefin-based thermoplastic elastomer as Component (A). The polyolefin-based thermoplastic elastomer comprises, as main components, an ethylene-propylene-nonconjugated diene terpolymer rubber or an ethylene-propylene copolymer rubber, and a polypropylene-based resin. Preferably used is a partially dynamic-crosslinked polyolefin-based thermoplastic elastomer. A partially dynamic-crosslinked polyolefin-based thermoplastic elastomer is obtained in such a manner that an organic peroxide etc. are added during kneading of an ethylene· propylene-based copolymer rubber and a polypropylene-based resin to partially crosslink the rubber phase. The partially dynamic-crosslinked polyolefin-based thermoplastic elastomer may be obtained by a one-step process in which both polymers are partially crosslinked while applying a shearing force, or by a two-step process in which an olefin rubber is partially crosslinked in advance, and then blended with a polypropylene-based resin. Both the partially dynamic-crosslinked polyolefin-based thermoplastic elastomer can be used. As such a polyolefin-based thermoplastic elastomer, for example, Milastomer (produced by Mitsui Chemicals, Inc.), Santoprene series (produced by AES), and other commercial products can be used as they are.

When a polyolefin-based thermoplastic elastomer is used in place of the ethylene ·propylene-based copolymer rubber, there is no need to further add an organic peroxide, unlike when the ethylene-propylene-based copolymer rubber is used. When a polyolefin-based thermoplastic elastomer is used as Component (A), the amounts of Components (B), (C), and (D) are the same as those when the ethylene· propylene-based copolymer rubber is used as Component (A).

The mixture comprising the above components as essential components can further contain, if necessary, powdery solid fillers including flaky fillers that are generally used in rubber or thermoplastic elastomers (e.g., various metal powders, glass powders, ceramic powders, granular or powdery polymer, clay, diatomaceous earth, talc, barium sulfate, calcium carbonate, magnesium carbonate, metal oxide, mica, graphite, and aluminum hydroxide), antioxidants (e.g., amines and derivatives thereof, imidazoles, phenols and derivatives thereof), waxes, stabilizers, tackifiers, mold-releasing agents, pigments, flame retardants, lubricants, and the like.

Additionally, small amounts of other thermoplastic resins or rubbers can be added to improve abrasion, moldability, and other properties. Further, short fibers etc. can be added to enhance strength and rigidity.

The mixture is melt-kneaded with a heat kneader, such as a single-screw extruder, a twin-screw extruder, a roll, a Banbury mixer, a Brabender, a kneader, or a high shear type mixer, and a crosslinking agent, and optionally a crosslinking aid, etc., are further added thereto. Alternatively, the above-described essential components are mixed simultaneously, and heat-melted and kneaded. Also usable is a thermoplastic material that is previously prepared by kneading an organic polymer material and a plasticizer, and that is used by further mixing with one or more organic polymer materials of the same type as used above or different types. Owing to the use of such a dynamic-crosslinked polyolefin-based thermoplastic elastomer in place of the ethylene-propylene-based copolymer rubber, electrical energy required for kneading, processing time, and thermal history for products can be reduced.

The obtained compound is formed into a desired shape by a known method, such as injection molding or extrusion molding, for use as a hard disk drive gasket for which high resistance to dust is required, and as a gasket material or a packing material applied to other parts for which airtightness is required.

When the molded product is used as a hard disk drive gasket, for example, the compound is ejected to a mold into which a metallic cover coated with an adhesive is inserted, to be integrally molded as a packing material. The metallic cover is made from, for example, an aluminum sheet, a plated aluminum sheet, a stainless steel sheet, a stainless steel damping steel, or the like. Examples of the adhesive include those obtained by dissolving, in an aromatic or aliphatic organic solvent, a polyolefin resin modified by grafting maleic anhydride, acrylic acid, or compound having polar groups, such as epoxy group, hydroxyl group, etc., onto side chains of the resin to form a liquid solution or dispersion, or those obtained by dissolving a styrene-butadiene copolymer rubber in an aromatic or aliphatic organic solvent to form a liquid solution. These can be used singly or in mixing. The adhesive is applied by the most suitable method such as dipping coating, spray coating, screen printing, brushing, stamping, etc., if necessary.

### EXAMPLES

The following describes the present invention with reference to Examples.

### Example 1

Ethylene propylene-diene copolymer rubber (EPT 3072EP, produced by Mitsui Chemicals, Inc): 100 parts by weight
Polypropylene resin (J-700 GP/PP Homopolymer, produced by Prime Polymer Co., Ltd.; MFR = 8.0 g/10 min): 60 parts by weight
Styrene-based thermoplastic elastomer (Septon 4077/SEEPS, produced by Kuraray Co., Ltd.; Mn = 260,000, amorphous polystyrene block content = 30 wt.%): 115 parts by weight
Plasticizer (Durasyn 168, produced by INEOS; C₁₀-derived poly α-olefin having a viscosity of 7.8 mm²/s): 170 parts by weight
Crosslinking agent (Percumyl D, produced by NOF Corporation): 2.4 parts by weight
Crosslinking aid (TAIC M60, produced by Nippon Kasei Chemical Co., Ltd.; triallyl isocyanurate): 1.2 parts by weight
   The above components were mixed and extruded in a twin-screw extruder (Hyper KTX46, produced by Kobe Steel, Ltd.) under conditions in which the preset temperature was 210 to 180°C, and the rotational speed was 150 rpm. The obtained material (mixture) was processed in an injection molding machine (KM-80, produced by Kawaguchi Tekko, Ltd.) under conditions in which the preset temperature was 210 to 180°C, the injection speed was 0.5 seconds, the injection pressure was 100 MPa, and the cycle time was 30 seconds, to form a test sheet (150 mm x 150 mm x 2 mm). The test sheet was tested for hardness, outgassing characteristics, and humidity permeability.
Hardness: according to JIS K6253: 1997, corresponding to ASTM D-2240 (three test sheets were laminated)
Outgassing test: A rectangular test sheet (50 mm x 3 mm x 2 mm) was subjected to heat extraction at 120°C for 1 hour. Then, the amount of outgassing was measured.
The results were evaluated according to the following criteria:
Sheets with an outgassing amount of less than 30 µg/g: ○
Sheets with an outgassing amount of 30 µg/g or more and less than 50 µg/g: Δ
Sheets with an outgassing amount of 50 µg/g or more: ×
(Sheets with an outgassing amount of 50 µg/g or more are not suitable for hard disk gaskets of servers, etc., for which high performance is required; whereas, sheets with an outgassing amount of less than 50 µg/g, particularly less than 30 µg/g, are suitable for hard disk gaskets)
Humidity permeability test: Distilled water (10 ml) was charged in a cylindrical stainless steel (SUS) vessel (inner diameter: 27 mm, depth: 50 mm). A test sheet formed into a circular shape (30 mm in diameter and 1 mm in thickness) was placed on the top of the vessel and fixed with a stainless steel (SUS) hollow cover (the inner diameter of the opening: 27 mm). The humidity permeability coefficient (g·mm/cm²·24 H) of the sheet was calculated from data obtained at 70°C after 100 hours. The results were evaluated according to the following criteria:
Sheets having a humidity permeability coefficient of less than 5 x 10⁻³ (g·mm/cm²·24 H): ○
Sheets having a humidity permeability coefficient of 5 x 10⁻³ (g·mm/cm²·24 H) or more: ×
(Sheets having a humidity permeability coefficient of 5 x 10⁻³ or more are not suitable for hard disk gaskets)

A cover-shaped aluminum sheet (treated by electroless nickel plating to a thickness of 2 to 5 µm) was coated with a modified olefin resin-type adhesive (Unistole R120K, produced by Mitsui Chemicals, Inc.), and the resulting cover part was inserted into a mold in advance. A gasket was formed in the cover similarly under the conditions in which the injection speed was 0.5 seconds, the injection pressure was 100 MPa, and the cycle time was 30 seconds. The resulting cover-integrated gasket was subjected to a sealing-property test and moldability evaluation.

Sealing property test: The cover-integrated gasket was mounted in an actual machine leak tester and subjected to heat treatment at 80°C for 168 hours in that state. Thereafter, the temperature was returned to room temperature, and a positive pressure of 5 kPa was continuously applied from the inside of the tester for 30 seconds. Then, the gasket was evaluated as follows:
Gaskets without leakage after 15 seconds: ○
Gaskets with leakage: ×
(Leakage occurs when the gasket material has inferior compression set characteristics or when the gasket shape has defects)
Moldability evaluation: Moldability was evaluated according to the following criteria:
Products with defects, such as deformation, shrinkage, chipping, welds, short shot, and flash, or products that were not integrally formed with covers, because they failed to be formed into a predetermined shape as a result of injection molding: ×
Products without such defects: ○

### Example 2

In Example 1, the same amount of Durasyn 166 (produced by INEOS; C₁₀-derived poly α-olefin having a viscosity of 6.0 mm²/s) was used as the plasticizer.

### Example 3

In Example 1, the same amount of Durasyn 170 (produced by INEOS; C₁₀-derived poly α-olefin having a viscosity of 10.0 mm²/s) was used as the plasticizer.

### Example 4

In Example 1, the same amount of Durasyn 148 (produced by INEOS; C₁₂-derived poly α-olefin having a viscosity of 7.8 mm²/s) was used as the plasticizer.

### Example 5

In Example 1, the same amount of Durasyn 128 (produced by INEOS; C₁₂/C₁₄-derived poly α-olefin having a viscosity of 7.8 mm²/s) was used as the plasticizer.

### Example 6

In Example 1, the same amount of a dynamically crosslinked olefin-based thermoplastic elastomer (Milastomer 7030B, produced by Mitsui Chemicals, Inc.) was used in place of the ethylene-propylene-diene copolymer rubber, and the amounts of polypropylene resin, styrene-based thermoplastic elastomer, and plasticizer were changed respectively to 15 parts by weight, 80 parts by weight, and 175 parts by weight.

### Comparative Example 1

In Example 1, the same amount of mineral oil (Process oil PW90, produced by Idemitsu Kosan Co., Ltd.; kinetic viscosity = 95 mm²/s) was used as the plasticizer.

### Comparative Example 2

In Example 1, the same amount of mineral oil (Process oil PW380, produced by Idemitsu Kosan Co., Ltd.; kinetic viscosity = 382 mm²/s) was used as the plasticizer.

### Comparative Example 3

In Example 1, the same amount of hydrocarbon-based synthetic oil (Lucant HC-10, produced by Mitsui Chemicals, Inc.; liquid ethylene/α-olefin cooligomer having a viscosity of 10.0 mm²/s) was used as the plasticizer.

### Comparative Example 4

In Example 1, the same amount of Durasyn 164 (produced by INEOS; C₁₀- derived poly α-olefin having a viscosity of 4.0 mm²/s) was used as the plasticizer.

### Comparative Example 5

In Example 1, the same amount of Durasyn 174 (produced by INEOS; C₁₀-derived poly α-olefin having a viscosity of 40.0 mm²/s) was used as the plasticizer.

### Comparative Example 6

In Example 1, the ethylene-propylene-diene copolymer rubber, crosslinking agent, and crosslinking aid were not used.

### Comparative Example 7

In Example 1, the amount of polypropylene resin was changed to 15 parts by weight, and the styrene-based thermoplastic elastomer and plasticizer were not used.

The following table shows the results obtained in the Examples and Comparative Examples.

**Table**

| | Example | | | | | | | Comparative Example | | | | | | |
|---|---|---|---|---|---|---|---|---|---|---|---|---|---|---|
| | 1 | 2 | 3 | 4 | 5 | 6 | | 1 | 2 | 3 | 4 | 5 | 6 | 7 |
| [Test sheet] | | | | | | | | | | | | | | |
| Hardness | 37 | 36 | 38 | 37 | 36 | 36 | | 39 | 40 | 42 | 36 | 38 | 20 | 65 |
| (Durometer type A; instant time) | | | | | | | | | | | | | | |
| Outgassing characteristics | ○ | Δ | Δ | ○ | ○ | ○ | | × | Δ | × | × | × | Δ | × |
| Humidity permeability | ○ | ○ | ○ | ○ | ○ | ○ | | ○ | ○ | ○ | ○ | ○ | Δ | ○ |

| [Gasket] | | | | | | | | | | | | | | |
|---|---|---|---|---|---|---|---|---|---|---|---|---|---|---|
| Sealing properties | ○ | ○ | ○ | ○ | ○ | ○ | | ○ | ○ | ○ | ○ | ○ | Δ | Δ |
| Moldability | ○ | ○ | ○ | ○ | ○ | ○ | | ○ | ○ | ○ | ○ | ○ | Δ | ○ |

### INDUSTRIAL APPLICABILITY

Sealing materials molded by the sealing material-forming composition of the present invention can be effectively used as gasket materials of hard disk drive cover-integrated gaskets, and as packing materials or gasket materials of products for places that dislike outgassing, such as semiconductor manufacturing sites and clean rooms.

## Claims

1. An elastomer composition comprising:
(A) 100 parts by weight of an ethylene-propylene-based copolymer rubber or a polyolefin-based thermoplastic elastomer;
(B) 10 to 200 parts by weight of a polypropylene-based resin;
(C) 10 to 200 parts by weight of a styrene-based thermoplastic elastomer; and
(D) 100 to 400 parts by weight of a C₁₀-, C₁₂-, or C₁₂/C₁₄-derived poly α-olefin plasticizer having a viscosity (according to JIS K2283, which corresponds to ASTM D-445) of 5 to 20 mm²/s at 100°C.

2. The elastomer composition according to claim 1, wherein the polyolefin-based thermoplastic elastomer is a partially dynamic-crosslinked polyolefin-based thermoplastic elastomer.

3. The elastomer composition according to claim 1, further comprising (E) 0.1 to 5 parts by weight of an organic peroxide crosslinking agent.

4. The elastomer composition according to claim 3, wherein (F) 0.1 to 2.5 parts by weight of a polyfunctional unsaturated compound crosslinking aid is used together with the organic peroxide crosslinking agent.

5. The elastomer composition according to claim 1, wherein the styrene-based thermoplastic elastomer is a polystyrene-poly(ethylene-propylene)-polystyrene triblock copolymer or a polystyrene-poly(ethylene/ethylene-propylene)-polystyrene triblock copolymer.

6. The elastomer composition according to claim 1, 3, or 4, which is used to mold a sealing material.

7. A sealing material molded by crosslinking of the elastomer composition according to claim 6.

8. The sealing material according to claim 7, which is used as a packing material of a hard disk drive cover-integrated gasket in which the packing material is integrated with the metallic cover by an adhesive.

## Patentansprüche

1. Elastomerzusammensetzung, umfassend:
(A) 100 Gew.-Teile eines Copolymerkautschuks auf Ethylen-Propylenbasis oder eines thermoplastischen Elastomers auf Polyolefinbasis;
(B) 10 bis 200 Gew.-Teile eines Harzes auf Polypropylenbasis;
(C) 10 bis 200 Gew.-Teile eines thermoplastischen Elastomers auf Styrolbasis; und
(D) 100 bis 400 Gew.-Teile eines von C₁₀-, C₁₂-, oder C₁₂-/C₁₄-abgeleiteten Poly-α-Olefin-Plastifizierers, der eine Viskosität (gemäß JIS K2283, was ASTM D-445 entspricht) von 5 bis 20 mm²/s bei 100°C aufweist.

2. Elastomerzusammensetzung gemäß Anspruch 1, worin das thermoplastische Elastomer auf Polyolefinbasis ein partiell dynamisch vernetztes thermoplastisches Elastomer auf Polyolefinbasis ist.

3. Elastomerzusammensetzung gemäß Anspruch 1, die weiterhin (E) 0,1 bis 5 Gew.-Teile eines organischen Peroxid-Vernetzungsmittels umfasst.

4. Elastomerzusammensetzung gemäß Anspruch 3, worin (F) 0,1 bis 2,5 Gew.-Teile einer polyfunktionalen ungesättigten Verbindung als Vernetzungshilfe zusammen mit dem organischen Peroxid-Vernetzungsmittel eingesetzt wird.

5. Elastomerzusammensetzung gemäß Anspruch 1, worin das thermoplastische Elastomer auf Styrolbasis ein Polystyrol-Poly(ethylen-propylen)-Polystyrol-Triblock-Copolymer oder ein Polystyrol-Poly(ethylen/ethylen-propylen)-Polystyrol-Triblock-Copolymer ist.

6. Elastomerzusammensetzung gemäß Anspruch 1, 3 oder 4, die zum Formen eines Dichtungsmaterials eingesetzt wird.

7. Dichtungsmaterial, das durch Vernetzen der Elastomerzusammensetzung gemäß Anspruch 6 geformt wird.

8. Dichtungsmaterial gemäß Anspruch 7, das als Packmaterial einer in eine Festplattenabdeckung integrierten Dichtung eingesetzt wird, worin das Packmaterial mit der metallischen Abdeckung durch ein Haftmittel integriert ist.

## Revendications

1. Composition d'élastomère comprenant :
(A) 100 parties en poids d'un caoutchouc de copolymère à base d'éthylène-propylène ou d'un élastomère thermoplastique à base de polyoléfine ;
(B) de 10 à 200 parties en poids d'une résine à base de polypropylène ;
(C) de 10 à 200 parties en poids d'un élastomère thermoplastique à base de styrène ; et
(D) de 100 à 400 parties en poids d'un plastifiant à base de poly-α-oléfine dérivé de C₁₀-, C₁₂-, ou C₁₂/C₁₄ ayant une viscosité (selon la norme JIS K2283, qui correspond à la norme ASTM D-445) allant de 5 à 20 mm²/s à 100°C.

2. Composition d'élastomère selon la revendication 1, dans laquelle l'élastomère thermoplastique à base de polyoléfine est un élastomère thermoplastique à base de polyoléfine de réticulation dynamique partielle.

3. Composition d'élastomère selon la revendication 1, comprenant en outre (E) de 0,1 à 5 parties en poids d'un agent de réticulation de peroxyde organique.

4. Composition d'élastomère selon la revendication 3, dans laquelle (F) de 0,1 à 2,5 parties en poids d'un auxiliaire de réticulation de composé insaturé polyfonctionnel sont utilisées conjointement avec l'agent de réticulation de peroxyde organique.

5. Composition d'élastomère selon la revendication 1, dans laquelle l'élastomère thermoplastique à base de styrène est un copolymère tri-bloc de polystyrène-poly (éthylène-propylène)-polystyrène ou un copolymère tri-bloc de polystyrène-poly(éthylène/éthylène-propylène)-polystyrène.

6. Composition d'élastomère selon la revendication 1, 3, ou 4, qui est utilisée pour mouler un matériau d'étanchéité.

7. Matériau d'étanchéité moulé par réticulation de la composition d'élastomère selon la revendication 6.

8. Matériau d'étanchéité selon la revendication 7, qui est utilisé en tant que matériau d'emballage d'un joint intégré au couvercle de lecteur de disque dur où le matériau d'emballage est intégré au couvecle métallique par un adhésif.
